(19) Europäisches Patentamt
European Patent Office
Office européen des brevets

(11) **EP 3 721 199 B1**

(12) **EUROPÄISCHE PATENTSCHRIFT**

(45) Veröffentlichungstag und Bekanntmachung des Hinweises auf die Patenterteilung:
**31.08.2022 Patentblatt 2022/35**

(21) Anmeldenummer: **18811828.5**

(22) Anmeldetag: **03.12.2018**

(51) Internationale Patentklassifikation (IPC):
***G01M 15/04*** (2006.01)

(52) Gemeinsame Patentklassifikation (CPC):
**G01M 15/04;** G07C 5/0841

(86) Internationale Anmeldenummer:
**PCT/EP2018/083301**

(87) Internationale Veröffentlichungsnummer:
**WO 2019/110483 (13.06.2019 Gazette 2019/24)**

(54) **PRÜFSTAND UND VERFAHREN ZUR DURCHFÜHRUNG EINES PRÜFVERSUCHS**

TEST STAND AND METHOD FOR PERFORMING A TEST

BANC D'ESSAI ET PROCÉDÉ DE MISE EN OEUVRE D'UN ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2017 AT 510002017**

(43) Veröffentlichungstag der Anmeldung:
**14.10.2020 Patentblatt 2020/42**

(73) Patentinhaber: **AVL List GmbH**
**8020 Graz (AT)**

(72) Erfinder:
• SIGNOR, Camillo
2620 Neunkirchen (AT)
• KURAL, Emre
8020 Graz (AT)
• HOCHMANN, Gerald
8151 Hitzendorf (AT)
• WINKLER, Wolfgang
8212 Pischeldorf in der Steiermark (AT)

(74) Vertreter: **Patentanwälte Pinter & Weiss OG**
**Prinz-Eugen-Straße 70**
**1040 Wien (AT)**

(56) Entgegenhaltungen:
**WO-A1-00/52363      JP-A- 2009 234 430**

• **"TEST PROCEDURE FOR FUEL CONSUMPTION RATE AND EXHAUST EMISSIONS OF HEAVY-DUTY HYBRID ELECTRIC VEHICLES USING HARDWARE-IN-THE-LOOP SIMULATOR SYSTEM", , 9. November 2012 (2012-11-09), XP055214127, Gefunden im Internet: URL:https://www2.unece.org/wiki/download/attachments/4064802/TS+12-2-34+-+281.pdf [gefunden am 2015-09-17]**
• **Na Na: "Gear shift analysis", , 18. Juli 2011 (2011-07-18), XP055561440, Sweden Gefunden im Internet: URL:http://www.unece.org/fileadmin/DAM/trans/doc/2011/wp29grpe/WLTP-DHC-09-03e.pdf [gefunden am 2019-02-25]**

**Beschreibung**

Die gegenständliche Erfindung betrifft ein Verfahren zur Durchführung eines Prüfversuchs auf einem Prüfstand, und einen zugehörigen Prüfstand, zur Nachbildung einer Testfahrt eines Fahrzeugs, die in Form von Messwerten repräsentiert wird, die eine zeitliche Abfolge einer Fahrzeuggeschwindigkeit umfassen, wobei am Prüfstand ein Prüfling und eine damit verbundene Belastungsmaschine vorgesehen sind und ein Prüflauf in Form einer zeitlichen Abfolge von Sollwerten für den Prüfling und die Belastungsmaschine vorgegeben wird.

In der Entwicklung von Verbrennungsmotoren, Antriebsträngen mit Verbrennungsmotoren und Fahrzeugen mit Verbrennungsmotoren, spielt die Überprüfung des Emissions- und Verbrauchsverhaltens des Verbrennungsmotors eine zentrale Rolle. In allen Phasen der Entwicklung erfolgt die Überprüfung des Emissions- und Verbrauchsverhaltens auf Prüfständen, wie einem Motorprüfstand, Antriebsstrangprüfstand oder Rollenprüfstand. Die gesetzlichen Rahmenbedingungen für diese Überprüfung verändern sich aber zurzeit sehr stark. Während früher vornehmlich genormte Fahrzyklen, wie beispielsweise der New European Driving Cycle (NEDC), für diese Überprüfung verwendet wurde, wird nun zusätzlich die Überprüfung unter realen Fahrbedingungen gefordert. Für das Emissionsverhalten kommen hierfür sogenannte Real Driving Emission (RDE) Prüfversuche zur Anwendung, bei denen kein bestimmte Fahrzyklus vorgegeben wird, sondern eine mehr oder weniger zufällige Fahrstrecke zurückgelegt wird, die lediglich gewissen festgelegten Rahmenbedingungen entsprechen muss.

Für die Entwicklung von Verbrennungsmotoren, Antriebssträngen oder Fahrzeugen auf dem Prüfstand ist es daher auch erwünscht, die Überprüfung am Prüfstand mit solchen realen Prüfversuchen durchzuführen.

Es ist daher zum einen erforderlich aus realen Testfahrten mit einem Fahrzeug auf einer realen Straße Messwerte der Testfahrt, wie beispielsweise GPS-Daten, Motordrehzahl, Fahrpedalstellung, Fahrzeuggeschwindigkeit, usw., zu erfassen. Zum anderen muss dann aus den erfassten Messwerten ein für die Testfahrt repräsentativer Prüflauf für einen Prüfstand erstellt werden, der dann am Prüfstand gesamt oder teilweise durchlaufen werden kann, um beispielsweise das Emissions- oder Verbrauchsverhalten des Verbrennungsmotors zu erfassen und auszuwerten. Beispiele hierfür können der DE 10 2012 018 359 A1 oder der WO 2015/166069 A2 entnommen werden.

Am Prüfstand wird der Verbrennungsmotor gemäß den Vorgaben des Prüflaufs betrieben, entweder alleine (Motorprüfstand), oder in Kombination mit anderen Komponenten (Antriebsstrangprüfstand, Rollenprüfstand). Zur Durchführung des Prüfversuchs wird der Verbrennungsmotor am Prüfstand, direkt oder indirekt, mit einer Belastungsmaschine (Dynamometer) verbunden, und die Belastungsmaschine und der Verbrennungsmotor werden durch eine Prüfstandautomatisierungseinheit gemäß den Vorgaben des Prüflaufs geregelt. An einen Verbrennungsmotor kann die Belastungsmaschine beispielswiese direkt über eine Prüfstandwelle angebunden werden. An einem Antriebsstrang beispielsweise indirekt über eine angetriebene Radnabe einer Halbachse des Antriebsstranges, wobei an einen Antriebsstrangprüfstand üblicherweise an den angetriebenen Radnaben an beiden Seiten eine Belastungsmaschine angebunden wird. Auf einem Rollenprüfstand treibt die Belastungsmaschine eine Rolle, auf der ein Rad des Fahrzeugs abrollt. Damit ist auch auf einem Rollenprüfstand die Belastungsmaschine indirekt (über die Rolle) mit dem Verbrennungsmotor verbunden. Mittels der Belastungsmaschine wird dabei in der Regel die Drehzahl des Verbrennungsmotors (oder des Antriebsstranges) eingestellt, indem diese ein Belastungsmoment für den Verbrennungsmotor erzeugt. Mit dem Verbrennungsmotor wird in der Regel ein Motormoment eingestellt. Dazu werden der Motorsteuereinheit üblicherweise durch Fahrpedalstellungen ein Fahrerwunsch bzw. Momentbedarf vorgegeben, die die Motorsteuereinheit in Motorsteuersignale (Einspritzmenge, Einspritzzeitpunkt, EGR Einstellung, Zündzeitpunkt, usw.) umsetzt. Es werden folglich als Prüfversuch Sollwerte wie die Motordrehzahl und das Motormoment oder dazu äquivalente Größe, wie beispielsweise eine Fahrpedalstellung, eine Antriebsstrangdrehzahl, usw., benötigt, um den Prüflauf am Prüfstand durchführen zu können. Diese Sollwerte, eigentlich ein zeitlicher Verlauf (auch als zeitdiskreter Verlauf) der Sollwerte, werden als Messwerte aus der realen Testfahrt generiert. Im Idealfall werden benötigte Sollwerte während der Testfahrt direkt gemessen, beispielsweise eine Motordrehzahl. Andere Sollwerte für den Prüflauf lassen sich aber nicht oder nur sehr schwer direkt messen und müssen daher anderweitig erzeugt werden. Ein Beispiel hierfür ist das Motordrehmoment oder der aktuelle Gang eines Schaltgetriebes (insbesondere im Falle eines Manuellgetriebes). Solche Sollwerte können aus anderen Messwerten abgeleitet werden, wie beispielsweise in der WO 2015/166069 A2 beschrieben wird. Für einen realitätsnahen Prüflauf sind insbesondere der Gang bzw. die Zeitpunkte der Gangschaltung interessant, da davon wesentlich die Emissions- und Verbrauchswerte beeinflusst werden.

Die Veröffentlichung " Kokujikan No. 281; March 16, 2007; TEST PROCEDURE FOR FUEL CONSUMPTION RATE AND EXHAUST EMISSIONS OF HEAVY-DUTY HYBRID ELEC-TRIC VEHICLES USING HARDWARE-IN-THE-LOOP SIMULATOR SYSTEM" offenbart ein Verfahren zur Durchführung einer HIL-Simulation. Dabei wird zuerst ein Prüfversuch auf einem Prüfstand durchgeführt, wobei Messwerte erfasst werden. Mit diesen Messwerten wird eine HIL-Simulation durchgeführt und die Ergebnisse werden mit den Ergebnissen des Prüfversuchs verglichen.

In der Präsentation "DHC Group, 2011; Gear shift analysis, proposed by Japan; Stockholm, Sweden; 6-7 July, 2011" wird ein Verfahren zur Analyse von Gängen eines Schaltgetriebes offenbart. Der verwendete Gang wird dabei aus einem bekannten Zusammenhang zwischen der Fahrzeuggeschwindigkeit, der Motordrehzahl, dem Reifenradius, und dem Übersetzungsverhältnis ermittelt.

WO 00/52363 offenbart ein Verfahren zur Gangerkennung in einem Fahrzeug. Die Gangerkennung basiert darauf, dass in einem Initialisierungsvorgang die zu den unterschiedlichen Gängen gehörenden Verhältnisse zwischen Motordrehzahl und Fahrzeuggeschwindigkeit in einem Speicher hinterlegt werden. Während der Fahrt berechnet ein Prozessor aus gemessenen Signalen der Motordrehzahl und der Fahrzeuggeschwindigkeit ein Verhältnis und vergleicht es mit den gespeicherten Werten.

JP 2009 234430 A offenbart eine Fahrzeug-Steuerungseinheit eines Fahrzeugs, mit der ein Gang eines Getriebes ohne Gangsensor ermittelt werden kann. Dabei wird ein Übersetzungsverhältnis auf Basis der Motordrehzahl und der Fahrzeuggeschwindigkeit gemäß einer bestimmten Formel analytisch berechnet. Auf Basis dieses berechneten Übersetzungsverhältnisses wird anhand eines vorab gespeicherten Zusammenhangs zwischen Fahrzeuggeschwindigkeit und der Motordrehzahl ein Gang ermittelt. Ein Clustering-Algorithmus zur Ermittlung der Gänge ist jedoch nicht offenbart.

Es ist daher eine Aufgabe der gegenständlichen Erfindung, ein Verfahren anzugeben, mit dem der Gang eines Schaltgetriebes für einen Prüflauf auf einfache Weise, ohne Informationen über das Schaltgetriebe, aus anderen verfügbaren Messwerten einer Testfahrt geschätzt werden kann.

Diese Aufgabe wird dadurch gelöst, dass die Messwerte eine zeitliche Abfolge einer Motordrehzahl umfassen, wobei aus Datenpunkten aus zusammengehörigen Fahrzeuggeschwindigkeiten und Motordrehzahlen mittels eines Clustering-Algorithmus eine Anzahl von Bereichen mit linearem Zusammenhang zwischen der Fahrzeuggeschwindigkeit und der Motordrehzahl identifiziert werden und der Clustering-Algorithmus die Datenpunkte der Anzahl der Bereiche zuordnet und für jeden Bereich ein Clusterzentrum berechnet, das jeweils als Gang interpretiert wird, dass den Datenpunkten eines Bereiches der mit dem Clusterzentrum des Bereiches verknüpfte Gang zugeordnet wird, um eine zeitliche Abfolge von Gängen zu erhalten und dass die ermittelte zeitliche Abfolge der Gänge als Sollwert des Prüflaufs oder zur Ermittlung eines anderen Sollwertes des Prüflaufs verwendet wird. Die Verwendung eines Clustering-Algorithmus ermöglicht die automatische Verarbeitung der vorliegenden Messwerte, um Bereiche mit linearem Zusammenhang zwischen der Fahrzeuggeschwindigkeit und der Motordrehzahl zu identifizieren, die als Fahrphasen mit bestimmtem Gang interpretiert werden. Durch Identifikation dieser linearen Bereiche kann jedem Bereich ein Gang zugeordnet werden, was eine zeitliche Abfolge von Gängen ergibt, die für den Prüflauf als Ganginformation verwendet werden kann.

Vorzugsweise wird in der zeitlichen Abfolge von Gängen jeweils zwischen zwei benachbarten Gängen ein Gangschaltzeitpunkt angenommen und die zeitliche Abfolge der Gangschaltzeitpunkte als Sollwert des Prüflaufs oder zur Ermittlung eines anderen Sollwertes des Prüflaufs verwendet.

In einer einfachen Ausgestaltung kann zumindest ein Gangschaltzeitpunkt als Kupplungschaltzeitpunkt für den Gangwechsel herangezogen wird, wobei der zumindest eine Kupplungschaltzeitpunkt als Sollwert des Prüflaufs oder zur Ermittlung eines anderen Sollwertes des Prüflaufs verwendet werden kann.

Das Ergebnis des Clustering-Algorithmus kann verbessert werden, wenn vor der Anwendung des Clustering-Algorithmus die Datenpunkte einer statistischen Häufigkeitsanalyse unterzogen werden, um Ausreißer Datenpunkte zu identifizieren. Dabei können die Ausreißer Datenpunkte für den Clustering-Algorithmus aus der zeitlichen Abfolge von Datenpunkten ausgeschieden werden. Hierzu kann durch Vorgabe eines Streubereichs in der Häufigkeitsverteilung auf einfache Weise festgelegt werden, ob ein Datenpunkt als Ausreißer Datenpunkt angesehen wird, oder ob eine Schwankung der Datenpunkte um die erwarteten linearen Zusammenhänge zwischen Fahrzeuggeschwindigkeit und der Motordrehzahl Messrauschen darstellt.

In einer vorteilhaften Ausgestaltung kann der Zeitpunkt des Auftretens eines ersten Ausreißer Datenpunktes nach einem Bereich mit linearem Zusammenhang zwischen der Fahrzeuggeschwindigkeit und der Motordrehzahl als Beginn einer Einschwingphase verwendet werden und das Ende der Einschwingphase nach einer vorgegebenen Zeit nach dem Beginn der Einschwingphase festgelegt werden, wobei zwischen dem Ende der Einschwingphase und dem Beginn der nächsten Einschwingphase eine stabile Fahrphase festgelegt wird und für den Clustering-Algorithmus nur Datenpunkte verwendet werden, die einer stabilen Fahrphase zugeordnet sind. Auch das ermöglicht eine Verbesserung des Ergebnisses des Clustering-Algorithmus.

In einer vorteilhaften Ausgestaltung kann der Zeitpunkt des Auftretens eines ersten Ausreißer Datenpunktes nach einem Bereich mit linearem Zusammenhang zwischen der Fahrzeuggeschwindigkeit und der Motordrehzahl als Beginn einer Einschwingphase verwendet werden und dieser Zeitpunkt als Gangschaltzeitpunkt und/oder Kupplungsschaltzeitpunkt für den Gangwechsel für den Prüflauf herangezogen werden.

Weitere Datenfehler können korrigiert werden, wenn als weiterer Messwert ein zeitlicher Verlauf einer Fahrpedalstellung verwendet wird und in diesem zeitlichen Verlauf zumindest ein Zeitbereich gesucht wird, in dem das Fahrpedal nicht betätigt wird, wobei in diesem Zeitbereich zeitlich aufeinander folgende Gangschaltzeitpunkte gesucht werden und der dem späteren Gangschaltzeitpunkt zugeordnet Gang in der zeitlichen Abfolge der Gänge als der Gang am zeitlich früheren Gangschaltzeitpunkte herangezogen wird. Damit können unrealistische Gangwechsel erkannt und korrigiert werden, was den Prüflauf verbessert und realitätsnäher macht.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt

Fig.1 eine Testfahrt mit einem Fahrzeug entlang einer Fahrtstrecke zur Aufzeichnung von Messwerten,
Fig.2 die Simulation einer Testfahrt mit einem virtuellen Fahrzeug entlang einer virtuellen Fahrtstrecke zur Erzeugung der Sollwerte für den Prüflauf,
Fig.3 eine Darstellung der linearen Bereichen in den Datenpunkten aus Fahrzeuggeschwindigkeit und Motordrehzahl,
Fig.4 eine Darstellung der linearen Bereichen in den Verhältnissen der Datenpunkten aus Fahrzeuggeschwindigkeit und Motordrehzahl,
Fig.5 eine zeitliche Abfolge der Gänge für die Durchführung des Prüfversuchs,
Fig.6 eine Häufigkeitsverteilung zur Identifikation von Ausreißer Datenpunkten,
Fig.7 eine Korrektur der zeitlichen Abfolge der Gänge anhand der Fahrpedalstellung,
Fig.8 die Einteilung der Zeitachse des Prüflaufs in Einschwingphasen und stabile Fahrphasen und
Fig.9 einen Prüfstand zur Durchführung des Prüfversuchs.

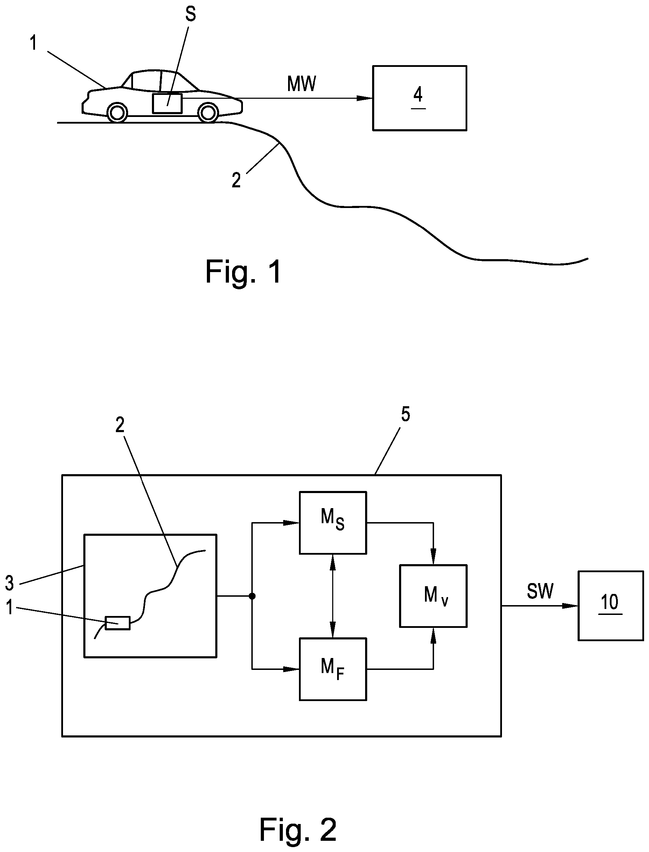

Der übliche Ausgangspunkt für die Erfindung ist eine Testfahrt mit einem Fahrzeug 1 entlang einer vorgegebenen Fahrtstrecke 2 (Fig.1). Dabei wird ein reales Fahrzeug 1 durch einen Fahrer auf einer realen Straße (auch eine Strecke auf einem abgeschlossenen Testgelände) bewegt.

Während der Testfahrt werden Messwerte MW erfasst. Das kann über entsprechende Sensoren S erfolgen, insbesondere Sensoren, die ohnehin in einem Fahrzeug 1 vorhanden sind.

Die Messwerte MW solcher Fahrzeugsensoren S können beispielsweise über die On-Board Diagnose (OBD) Schnittstelle direkt ausgelesen werden. Selbstverständlich kann das Fahrzeug 1 für die Testfahrt aber auch mit nicht serienmäßigen Fahrzeugsensoren ausgerüstet werden, um weitere Messwerte MW, beispielsweise Emissionswerte (NOx, HC (CO, $CO_2$, usw.)), zu erfassen.

Es ist aber selbstverständlich auch denkbar, dass Messwerte MW bereits durchgeführter Testfahrten oder anderweitig erhaltene Messwerte MW (beispielsweise aus einer Simulation einer Testfahrt), die eine Testfahrt repräsentieren, in einer Datenbank gespeichert sind und für die Erfindung solche bereits gespeicherten Messwerte MW verarbeitet werden.

Die Messwerte MW repräsentieren damit die Testfahrt mit dem Fahrzeug 1 entlang einer Fahrtstrecke 2.

Die Erfindung geht aber davon aus, dass der Gang Gn des Schaltgetriebes des Fahrzeugs 1 während der Testfahrt nicht als Messwert MW direkt zugänglich ist oder während der Testfahrt schlichtweg nicht gemessen oder erfasst wurde und damit auch nicht als Messwert MW vorliegt. Der zeitliche Schaltverlauf wird jedoch für die Durchführung eines Prüflaufs auf einem Prüfstand 10 für einen Prüfling mit einem Verbrennungsmotor 11, beispielsweise ein Fahrzeug oder einer Fahrzeugkomponente (Verbrennungsmotor, Antriebsstrang), auf Basis der Testfahrt benötigt.

Wenn als Prüfling am Prüfstand 10 ein Antriebsstrang mit Schaltgetriebe aufgebaut ist, werden die Schaltzeitpunkte und die gewählten Gänge für die Steuerung des Schaltgetriebes benötigt. Gleiches gilt im Falle eines Fahrzeugs als Prüfling auf einem Rollenprüfstand. In beiden Fällen kann der Getriebesteuereinheit direkt der Schaltzeitpunkt und der gewählte Gang vorgegeben werden oder die Getriebesteuereinheit am Prüfstand 10 selbst durch eine Simulation ersetzt werden. Das kommt insbesondere bei einem Automatikgetriebe zur Anwendung. Alternativ kann am Prüfstand 10 auch ein Schaltroboter vorgesehen sein, der das Schaltgetriebe bedient. Das kommt insbesondere im Falle eines Manuellgetriebes zur Anwendung.

Wenn als Prüfling nur der Verbrennungsmotor 11 am Prüfstand 10 aufgebaut ist, dann wird der Prüflauf häufig simuliert. Dabei wird ein virtuelles Fahrzeug durch einen virtuellen Fahrer entlang einer virtuellen Fahrtstrecke bewegt. Die Bewegung des Fahrzeugs durch die virtuelle Umgebung wird in einer Simulationseinheit 5 durch entsprechende Simulationsmodelle simuliert. Für die Simulation werden natürlich ebenfalls die Gangschaltzeitpunkte GSi und die gewählten Gänge Gn benötigt. Das ist schematisch in Fig.2 dargestellt. Die simulierte Fahrtstrecke 2 entspricht dabei der Fahrtstrecke der Testfahrt und wird beispielsweise in Form von GPS-Daten, Steigung, Gefälle, Neigung, Kurvenradien. Kreuzungen, Verkehrszeichen, usw. beschrieben. Durch die Simulation werden die Sollwerte SW für die Durchführung des Prüflaufs auf einem Prüfstand 10 generiert. Für die Simulation der Bewegung des Fahrzeugs 1 werden die Gangschaltzeitpunkte und der gewählte Gang benötigt.

Zur Simulation der Testfahrt werden die Straßenbedingungen (Seehöhe, Steigung, Kurvenradius, Straßenbelag, usw.) durch ein Straßenmodell Ms abgebildet. Ein Fahrermodell $M_F$ bildet die Eigenschaften eines Fahrers (Schaltverhalten, Fahrverhalten, usw.) ab und ein Fahrzeugmodell Mv bildet die Dynamik des Fahrzeugs ab. Natürlich können dazu auch noch weitere oder andere Simulationsmodelle implementiert und in die Simulation eingebunden werden, wie beispielsweise ein Reifenmodell. In solchen Simulationen können auch Ereignisse, wie beispielsweise Verkehrszeichen, Ampeln, andere Verkehrsteilnehmer, Straßenverkehr, usw. berücksichtigt werden. Die dazu notwendigen Simulationsmodelle M und Simulationseinheiten 5 sind bekannt und verfügbar, weshalb hier nicht näher darauf eingegangen werden muss.

Es ist damit ersichtlich, dass die Information über Gangschaltzeitpunkte GSi und die dabei gewählten Gänge Gn für die realitätsnahe Durchführung eines Prüfversuchs mit einem Prüfling auf einem Prüfstand 10 eine wichtige Information darstellt. Zusätzlich können auch Kupplungschaltzeitpunkte, die nicht notwendigerweise exakt mit Gangschaltzeitpunkten GSi übereinstimmen müssen, interessant sein.

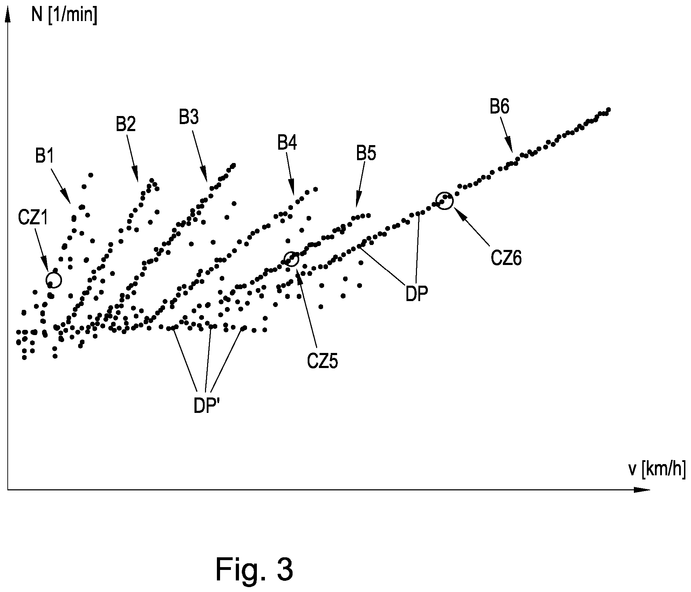

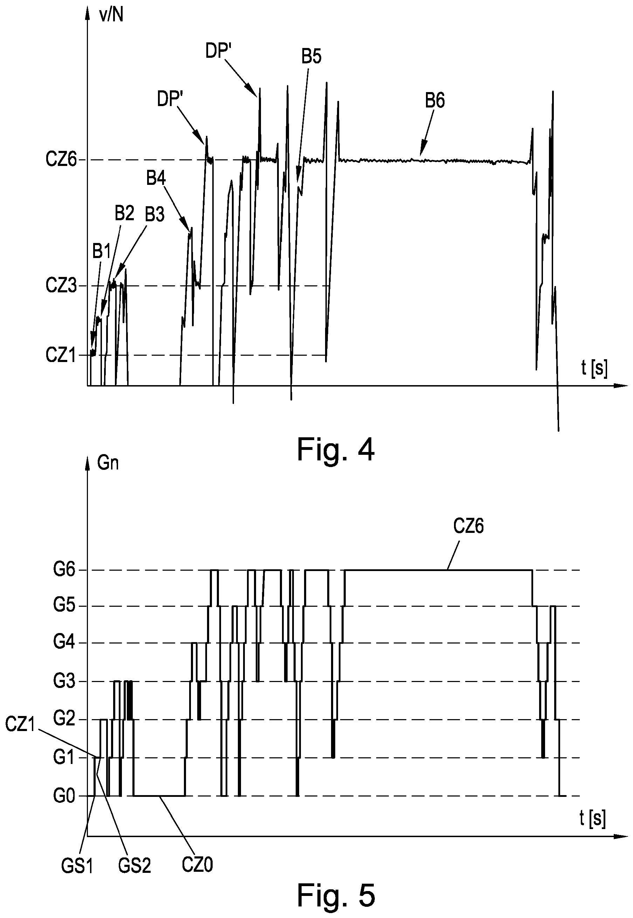

Mit einem gewählten Gang Gn und einer geschlossenen Kupplung kann man von einem linearen Zusammenhang zwischen der Fahrzeuggeschwindigkeit v (z.B. in m/s) und der Motordrehzahl N (z.B. in min$^{-1}$) ausgehen. Als Motordrehzahl N wird im Sinne der Erfindung auch eine äquivalente Drehzahl eines Antriebsstranges, der vom Verbrennungsmotor 11 angetrieben wird, verstanden. Man könnte nun für die gesamte Testfahrt die Messwerte MW für die Fahrzeuggeschwindigkeit v und die Motordrehzahl N in einem Kennfeld (ein Datenpunkt DP für jedes korrespondierende Fahrzeuggeschwindigkeit v / Motordrehzahl N Paar) auftragen, was zu einer Anzahl (entsprechend der Anzahl der während der Testfahrt eingelegten Gänge) von linearen Bereichen Bn führen würde, wie in Fig.3 dargestellt. Das bedeutet natürlich auch, dass als Messwerte MW zumindest die Fahrzeuggeschwindigkeit v und die Motordrehzahl N vorliegen müssen. Jedem Datenpunkt DP in Fig.3 kann natürlich aus dem zeitlichen Verlauf der Testfahrt ein Zeitpunkt auf einer Zeitachse (oder äquivalent Weg auf einer Wegachse) zugeordnet werden. Gleichfalls kann das Verhältnis v/N zwischen Fahrzeuggeschwindigkeit v und Motordrehzahl N für die Bestimmung der Gangwechsel herangezogen werden. In Fig.4 ist das Verhältnis v/N über die Zeit t der Testfahrt (oder äquivalent auch über die Wegstrecke) aufgetragen. Jedes Verhältnis v/N entspricht natürlich wieder einem Datenpunkt DP. Hierbei werden für die Gangerkennung Zeiten mit N=0 (was dem Motorstillstand entspricht) vorzugsweise ausgeschieden. Solche Zeiten sind für Gangerkennung für den Prüflauf aber in nachvollziehbarer Weise ohnehin nicht interessant. Zeiten mit v=0 (also Zeiten in denen das Fahrzeug stillsteht, beispielsweise Warten vor einer roten Ampel) sind für die Gangerkennung natürlich interessant.

In beiden Darstellungen erkennt man den erwarteten linearen Zusammenhang zwischen Fahrzeuggeschwindigkeit v und Motordrehzahl N in einem bestimmten Gang Gn. In Fig.3 in Form von strahlenförmigen Bereichen Bn, n≥1 und in Fig.4 in Form von konstanten Bereichen Bn, n≥1 des Verhältnisses v/N. Die Anzahl n entspricht dabei der Zahl der Gänge Gn, die während der Testfahrt verwendet wurde, üblicherweise alle verfügbaren Gänge des Fahrzeugs 1.

Ein Mensch könnte nun natürlich diese Diagramme entsprechend interpretieren und die Gänge Gn und Gangschaltzeitpunkte GSi zuordnen. Das Verfahren soll aber natürlich automatisiert ablaufen und erhält nur eine zeitliche Abfolge von gemessenen Fahrzeuggeschwindigkeiten v und Motordrehzahlen N (Datenpunkten DP) aus der Testfahrt. Erfindungsgemäß wird auf die Datenpunkte DP ein Clustering-Algorithmus angewendet, der in der Lage ist eine Vielzahl von Datenpunkten DP sogenannten Clustern zuzuordnen. Die Anzahl m der Cluster entspricht damit zumindest der Anzahl n der Gänge Gn, die in der Testfahrt vorkommen. Oftmals wird noch zumindest ein weiterer Cluster verwendet, in dem nicht zuordenbare Datenpunkte DP gesammelt werden. Ein bekannter Clustering-Algorithmus ist beispielsweise der k-Means-Algorithmus, der in verschiedenen Ausprägungen bekannt ist. Ein Clustering-Algorithmus ermittelt für jedes Cluster (hier die Bereiche Bn) ein Clusterzentrum CZn und jeder Datenpunkt DP ist einem Clusterzentrum CZn, und damit einem bestimmten Cluster, zugeordnet. Ein Clusterzentrum CZn ist einfach gesprochen ein Punkt innerhalb eines Clusters dessen Abstand (nach einem definierten Abstandsmaß, z.B. die Euklidische Distanz) zu allen Datenpunkten DP des Clusters minimal ist. Ein Clustering-Algorithmus ist damit typischerweise ein iteratives Optimierungsverfahren. Die ermittelten Clusterzentren CZn werden als Gänge Gn interpretiert und jeder dem Clusterzentrum zugeordnete Datenpunkt DP wird diesem Gang Gn zugeordnet. Damit kann für jeden Datenpunkt DP ermittelt werden, in welchem Gang Gn sich das Fahrzeug 1 in diesem Datenpunkt DP befunden hat. Damit kann für die Datenpunkte DP eine Zeitachse (oder äquivalent Wegachse) mit den verschiedenen Gängen Gn und dazwischenliegenden i≥1 Gangwechseln, also den Gangschaltzeitpunkten GSi, erstellt werden, wie in Fig.5 dargestellt.

Es ist ebenso bekannt, dass die Qualität des Ergebnisses des Clustering-Algorithmus mittels eines definierten Qualitätsmaß überprüft werden kann. Beispiele hierfür sind der Dunn-Index oder der Davies-Bouldin Index als Qualitätsmaße. Der Clustering-Algorithmus kann dazu für die Daten mehrmals hintereinander ausgeführt werden und das Clustering, das das beste Qualitätsmaß erzielt, wird verwendet.

Beispielsweise werden die Bereiche Bn der Verhältnisse v/N mit dem Clustering-Algorithmus geclustert. Damit wird jeder Datenpunkt DP einem Clusterzentrum CZn zugeordnet, das im Bereich der konstanten Bereiche BN der Verhältnisse v/N liegen wird. Das Ergebnis ist in Fig.5 dargestellt. Darin ist für jeden Datenpunkt DP das zugeordnete Clusterzentrum CZn aufgetragen, das als Gang Gn interpretiert wird, und man erkennt die Zeitbereiche, in denen bestimmte Gänge Gn eingelegt sind und sich dazwischen die Gangschaltzeitpunkte GSi ergeben. Diese Information kann direkt als Ganginformation für den Prüflauf verwendet werden.

Der Clustering-Algorithmus kann unterstützt werden, wenn dem Clustering-Algorithmus die Anzahl n der Gänge Gn, und damit die minimale Anzahl der zu erwarten den Cluster, bekanntgegeben wird. Nachdem das Fahrzeug der Testfahrt bekannt ist, wäre das in den meisten Fällen möglich. Ein Clustering-Algorithmus ist aber grundsätzlich auch in der Lage die Anzahl der Cluster selbst zu ermitteln.

Aufgrund von Situationen während der vermessenen Testfahrt wie beispielsweise Kupplung offen, Freilaufphasen (kein Gang eingelegt), Gangwechsel, usw., aber auch aufgrund von Messfehlern, wird es Datenpunkte DP' geben, die neben dem zu erwartenden linearen Zusammenhang liegen, wie in den Figuren 3 und 4 angedeutet. Beispielsweise ist es typisch, dass während des Gangwechsels die Fahrzeuggeschwindigkeit v und/oder die Motordrehzahl N deutlich vom erwartenden linearen Zusammenhang abweichen können.

Insbesondere aus Fig.4 erkennt man beispielsweise, dass es abschnittsweise in etwa konstante Bereiche Bn der Verhältnis v/N, also v/N ~ konst., gibt, wobei sich auch Messrauschen durch kleine Schwankungen in diesen Bereichen Bn bemerkbar macht. Man erkennt aber auch signifikante Ausreißer, also Datenpunkte DP', die deutlich von den linearen Bereichen Bn abweichen und die im Bereich der Gangschaltzeitpunkte GSi auftreten. Solche Datenpunkte DP' sind nicht auf Messfehler zurückzuführen, sondern werden auf Effekte beim Gangwechsel, insbesondere beim Betätigen der Kupplung, zurückgeführt.

Das erfindungsgemäße Verfahren kann nun zum einen verbessert werden, indem diese Ausreißer Datenpunkte DP' vor dem Clustering identifiziert und diese Datenpunkte DP' ausgeschieden werden, also nicht geclustert werden. Zum anderen können diese identifizierten Datenpunkte DP', bzw. der zugeordnete Zeitpunkt auf der Zeitachse, zum Festlegen der Gangschaltzeitpunkt GSi und/oder Kupplungszeitpunkte KSi verwendet werden. Alternativ könnte man die Kupplungszeitpunkte KSi natürlich auch in einem festgelegten Zusammenhang zum Gangschaltzeitpunkt GSi ermitteln, beispielsweise eine festgelegte Zeit vor und nach dem Gangschaltzeitpunkt GSi.

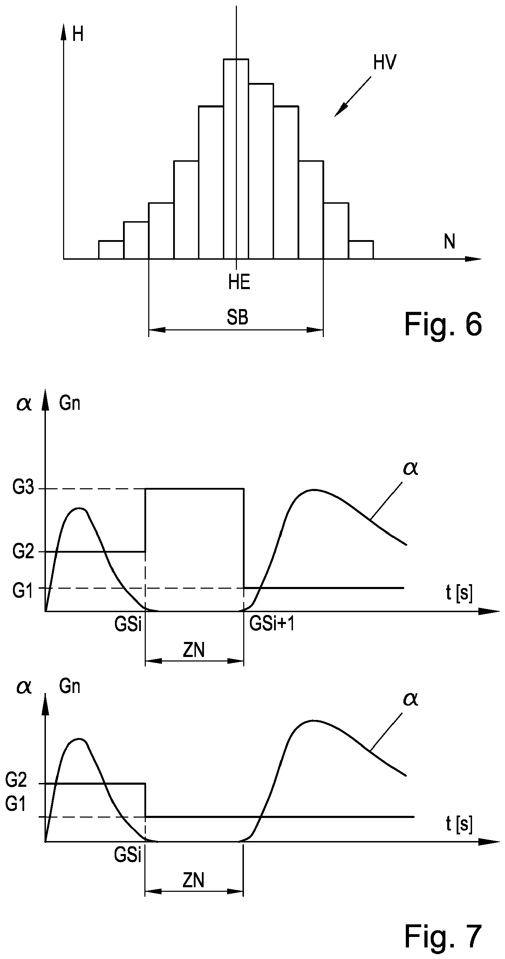

Die Ausreißer Datenpunkte DP' können beispielsweise mit einer bekannten statistischen Häufigkeitsanalyse gefunden werden. Das wird am Beispiel der Fig.4 mit den Verhältnissen v/N erläutert. Es werden die Häufigkeiten H des Auftretens der einzelnen Datenpunkte DP, hier also der Verhältnisse v/N, ermittelt, was zu statistischen Häufigkeitsverteilungen HV führt, wie beispielshaft in Fig.6 dargestellt. Es werden sich dabei der Anzahl n der Gänge Gn entsprechende Anzahl von Häufigkeitsverteilungen HV ergeben. Oftmals werden dazu bestimmte Bereiche der Daten in Häufigkeitsgruppen Hx gruppiert. Die Häufigkeitsverteilung HV ergibt sich somit als Streuungsbereich der Häufigkeiten H um einen Erwartungswert HE (die größte Häufigkeit H). Es wird ein zulässiger Streubereich SB um den Erwartungswert HE festgelegt oder vorgegeben. Als Ausreißer, werden dann die Datenpunkte DP' angesehen, deren zugeordnete Häufigkeit außerhalb des Streubereichs SB liegen. In der Statistik wird oftmals der Quartilsabstand $Q_{75}$-$Q_{25}$ verwendet, also der Bereich der 50% der Häufigkeitsverteilung umfasst. Der Streubereich SB kann dann beispielsweise als x-faches des Quartilsabstandes definiert werden, beispielsweise das 1,5-fache des Quartilsabstandes.

Ausreißer Datenpunkte DP' lassen sich natürlich auch auf andere Weise identifizieren. Beispielsweise könnte überprüft werden, um wieviel sich ein Datenpunkt DP gegenüber dem vorherigen, oder einem Mittelwert einer Anzahl von vorherigen Datenpunkten DP, ändert. Überschreitet die Änderung einen vorgegebenen Schwellwert, könnte ein Datenpunkt DP als Ausreißer identifiziert werden.

Damit lassen sich die markanten Ausreißer Datenpunkte DP' auf einfache Weise identifizieren.

Das erste Auftreten eines Ausreißer Datenpunktes DP' nach einer Phase mit v/N~konst. kann als Gangschaltzeitpunkt GSi herangezogen werden. Auch ein Kupplungsschaltzeitpunkt KSi (Kupplung auf) kann auf den Gangschaltzeitpunkt GSi bezogen werden, beispielsweise am gleichen Zeitpunkt oder eine festgelegte Zeit davor. Der folgende Kupplungsschaltzeitpunkt KSi (Kupplung zu) kann eine festgelegte Zeit nach dem Öffnen der Kupplung festgelegt werden. Die Zeiten für Kupplung auf und/oder Kupplung zu könnten für den Prüfversuch auch von einem Fahrertyp abhängig gemacht werden.

Das Ergebnis der Ermittlung der Gänge Gn und der Gangschaltzeitpunkte GSi, und eventuelle der Kupplungsschaltzeitpunkt KSi, kann noch weiter verbessert werden, wenn zusätzlich noch Messwerte MW für die Fahrpedalstellung $\alpha$ des Fahrzeugs 1 berücksichtigt werden. Dieser Schritt geht davon aus, dass während des Gangwechsels das Fahrpedal nicht betätigt oder zurückgenommen wird. Es werden folglich im zeitlichen Verlauf der Fahrpedalstellung $\alpha$ Zeitbereiche ZN gesucht, in denen das Fahrpedal nicht betätigt ist, beispielsweise die Fahrpedalstellung $\alpha$=0 ist (oder durch Vorgabe eines Fensters um Null annähernd Null ist). Finden sich in einem solchen Zeitbereich ZN Gangschaltzeitpunkte GSi, dann werden die Gänge Gn an den Gangschaltzeitpunkten GSi untersucht, wie anhand von Fig.7 erläutert wird. Angenommen werden kann, dass während eines Zeitbereichs ZN immer nur ein Gangwechsel, entweder rauf oder runter, stattfindet. Damit sollte in einem Zeitbereich ZN auch nur ein Gangschaltzeitpunkt GSi zu finden sein. Finden sich in einem Zeitpunkt ZN aber zeitlich aufeinanderfolgende Gangschaltzeitpunkte GSi, GSi+1 (Fig.7 oben), kann davon ausgegangen werden, dass es sich um einen Datenfehler handelt. Dieser kann korrigiert werden, indem der Gang Gn am zeitlich späteren Gangschaltzeitpunkt GSi+1 als der richtige Gang Gn angesehen wird und am zeitlich davor liegenden Gangschaltzeitpunkt GSi der Gang Gn auf den Gang Gn am Gangschaltzeitpunkt GSi+1 korrigiert wird (Fig.7 unten).

Eine mögliche konkrete Umsetzung des erfindungsgemäßen Verfahrens zur Gangerkennung aus Messwerten MW der Fahrzeuggeschwindigkeit v, der Motordrehzahl N und der Fahrpedalstellung $\alpha$ könnte am Beispiel der Verhältnisse v/N wie folgt ablaufen.

Zuerst werden für alle j vorhandenen Datenpunkte DPj der Testfahrt die Verhältnisse v/N(j) ermittelt, also v / N(j) = $v(t_j)/N(t_j)$ mit den diskreten Zeitpunkten $t_j$ auf der Zeitachse t. Für diesen Schritt wurden vorzugsweise bereits die Datenpunkte DPj mit $N(t_j)$=0 ausgeschieden. Die derart ermittelte zeitliche Abfolge der Datenpunkte DPj wird durch eine vorgegebene, nach der Zeit t differenzierbare Funktion F angenähert, beispielsweise eine Spline-Interpolation, z.B. durch kubische Splines. Als nächster Schritt werden die lokalen Maxima $Fmax_k$ der Funktion F bestimmt. Dazu kann beispielsweise die Funktion F nach der Zeit t abgeleitet werden und ein lokales Maxima kann als Punkt definiert werden, an dem die Differenz aus den Differenzen der Ableitung des Punktes zu den jeweiligen benachbarten Punkten gegensinniges Vorzeichen hat, also z.B.

$$\left| \text{sgn}\left[ \frac{d}{dt}F(j) - \frac{d}{dt}F(j-1) \right] - \text{sgn}\left[ \frac{d}{dt}F(j+1) - \frac{d}{dt}F(j) \right] \right| = 2 \text{ mit der Vorzeichenfunktion sgn.}$$

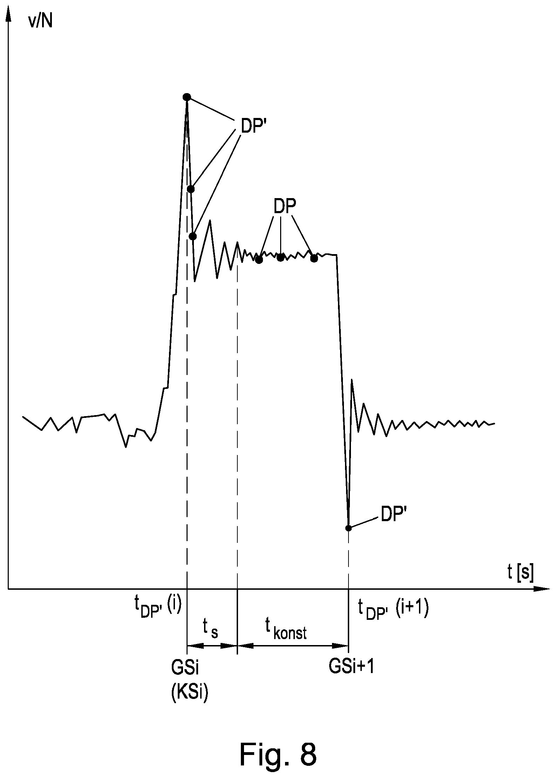

Lokale Maxima könnten natürlich auch auf andere Weise identifiziert werden, beispielsweise über die zweite zeitliche Ableitung der Funktion F. Die derart ermittelten k lokalen Maximalwerte $Fmax_k$ werden dann vorzugsweise einer statistischen Häufigkeitsanalyse unterworfen, um Ausreißer Datenpunkte DP' zu identifizieren. Ausreißer Datenpunkte DP' werden auf Schaltvorgänge zurückgeführt, wie oben ausgeführt wurde. Es werden nun die Ausreißer Datenpunkte DP' näher untersucht, wie anhand von Fig.8 erläutert wird.

Wie bereits ausgeführt, ist ein Gangwechsel dadurch gekennzeichnet, dass das Verhältnis v/N zuerst stark schwankt, was zu Ausreißer Datenpunkten DP' führt, und danach eine Zeitspanne folgt, während der das Verhältnis v/N ungefähr konstant ist. Es wird nun das erste zeitliche Auftreten $t_{DP'}(i)$ eines Ausreißer Datenpunktes DP' gesucht, der einer Zeitspanne eines konstanten Verhältnisses v/N folgt. Dieses erste zeitliche Auftreten $t_{DP'}(i)$ wird als Beginn eines Gangwechsels, also als Gangschaltzeitpunkt GSi, interpretiert. Gleichzeitig kann dieser Zeitpunkt auch als Kupplungsschaltzeitpunkt KSi (also Kupplung offen) aufgefasst werden. Der Kupplungsschaltzeitpunkt KSi kann aber auch eine vorgegebene Zeit vor dem Gangschaltzeitpunkt GSi festgelegt werden. Dem ersten zeitlichen Auftreten $t_{DP'}(i)$ eines Ausreißer Datenpunktes DP' folgt eine Zeitspanne, in der sich die Datenpunkte auf den linearen Bereich Bn einschwingen, also z.B. auf v/N~konst. Es wird eine Einschwingzeit ts festgelegt, z.B. 3s, und die Datenpunkte DP, die zwischen dem ersten zeitlichen Auftreten $t_{DP'}(i)$ des Ausreißer Datenpunktes DP' und der folgenden Einschwingzeit ts liegen, werden einer Einschwingphase zugeordnet, die einem Gangwechsel folgt. Die folgenden Datenpunkte DP, bis zum nächsten Auftreten $t_{DP'}(i+1)$ eines Ausreißer Datenpunktes DP', werden einer stabilen Fahrphase $t_{konst}$ mit eingelegtem Gang Gn zugeordnet. Das wird für die gesamte Zeitachse t der Testfahrt durchgeführt. Die Zeitachse t der Testfahrt wird damit in Phasen des Gangwechsels (jeweils erstes Auftreten eines Ausreißer Datenpunktes DP' + Einschwingphase $t_s$) und in dazwischenliegenden stabilen Fahrphasen $t_{konst}$ eingeteilt. Alle Datenpunkte DP, die den stabilen Fahrphasen $t_{konst}$ zugeordnet sind, werden nun dem Clustering-Algorithmus übergeben, um die Clusterzentren CZn, und damit die Gänge Gn, zu berechnen. Alle anderen Datenpunkte DP könnten für das Clustering auf Null gesetzt werden und auch dem Clustering-Algorithmus übergeben werden, der damit n+1 Cluster ermitteln würde. Wie oben ausgeführt kann das Clustering auch mehrmals durchgeführt werden und mittels eines definierten Qualitätsmaßes das beste Ergebnis ausgewählt werden.

Es könnte auch das Zentrum der Datenpunkte DP in einer Einschwingphase $t_s$ ermittelt werden und der zugehörige Zeitpunkt als Gangschaltzeitpunkt GSi herangezogen werden. Als Kupplungszeitpunkt KSi könnte dabei das zugehörige erste zeitliche Auftreten eines Ausreißer Datenpunktes DP' herangezogen werden.

Als Zeitpunkt des Schließens der Kupplung könnte das Ende der Einschwingphase ts herangezogen werden, oder eine festgelegte Zeitspanne nach dem Öffnen der Kupplung. Diese Zeitspanne könnte auch von einem Fahrertyp abhängig gemacht werden.

Nachfolgend kann auf das Ergebnis des Clusterings mit der Fahrpedalstellung α noch die Gangkorrektur, wie anhand von Fig.7 beschrieben, ausgeführt werden.

Obwohl die Erfindung oben vorwiegend mit Bezugnahme auf die Fig.4 anhand der Verhältnisse v/N erläutert wurde, lässt sich die Erfindung aber in gleicher Weise anwenden, wenn man von einem Zusammenhang nach der Fig.3 ausgeht.

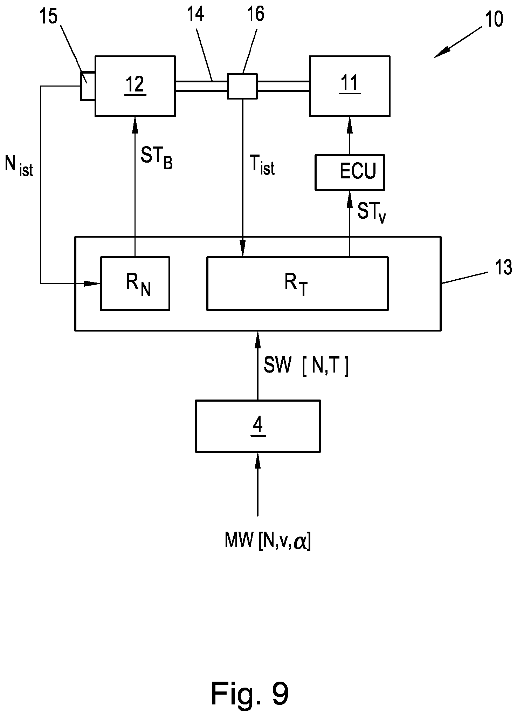

Auf einem Prüfstand 10 (Fig.9), hier ein Motorprüfstand, ist beispielsweise ein Verbrennungsmotor 11 als Prüfling mit einer Belastungsmaschine 12 verbunden, beispielsweise über eine Prüfstandwelle 14. Eine Prüfstandautomatisierungseinheit 13 regelt sowohl den Verbrennungsmotor 11, als auch die Belastungsmaschine 12 gemäß den Vorgaben des Prüfversuchs in Form bestimmter Sollwerte SW für eine zu regelnde Größe. Typischerweise wird mit der Belastungsmaschine 12 ein gemäß dem Prüfversuch vorgegebener zeitlicher Verlauf einer Drehzahl N eingeregelt und mit dem Verbrennungsmotor 11 ein gemäß dem Prüfversuch vorgegebener zeitlicher Verlauf eines Drehmoments T. Aus den vorgegebenen Sollwerten SW ermittelt die Prüfstandautomatisierungseinheit 13 die Stellgrößen ST, mit denen der Verbrennungsmotor 11 und die Belastungsmaschine 12 angesteuert werden. Im Falle der Belastungsmaschine 12 ist die Stellgröße $ST_B$ beispielsweise eine Drehzahl, womit die Motordrehzahl N des Verbrennungsmotors 11 eingestellt wird. Dazu kann in der Prüfstandautomatisierungseinheit 13 auch ein entsprechender Drehzahlregler $R_N$ implementiert sein, der auch einen Istwert der Drehzahl $N_{ist}$ erhalten kann, der beispielsweise mittels eines Drehzahlsensors 15 an der Belastungsmaschine 12 erfasst wird. Der Verbrennungsmotor 11 wird anhand einer geeigneten Stellgröße STv geregelt, beispielsweise eine Fahrpedalstellung α oder ein Motormoment T, die einer Motorsteuereinheit ECU übergeben wird. In der Prüfstandautomatisierungseinheit 13 kann hierfür ein Drehmomentenregler $R_T$ implementiert sein, der aus einem Istwert des Drehmoments $T_{ist}$, der z.B. mittels eines Drehmomentensensors 16 an der Prüfstandwelle 14 gemessen werden kann oder aus anderen gemessenen Größen auch geschätzt werden kann (Beobachter), und dem vorgegebenen Sollwert SW eine Fahrpedalstellung $\alpha$ ermittelt, die an die Motorsteuereinheit ECU zum Regeln des Verbrennungsmotors 11 übergeben wird. Selbstverständlich sind auch andere Ausführungen eines Prüfstandes 10 denkbar.

Die Sollwerte SW, z.B. Motordrehzahl N und Drehmoment T, werden in einer Auswerteeinheit 4 aus Messwerten MW generiert. Dabei kann ein nicht verfügbarer Messwert auch aus anderen Messwerten MW abgeleitet werden.

Ein Beispiel hierfür ist das Drehmoment T des Verbrennungsmotors 11, das oftmals während einer realen Testfahrt nicht gemessen werden kann. Das Drehmoment kann dann beispielsweise aus bekannten Kennfeldern (z.B. ein Kennfeld für Drehzahl, Fahrpedalstellung, Drehmoment) entnommen werden oder kann auch aus Modellen oder physikalischen Zusammenhängen berechnet werden. Aus einer Straßensteigung, der Fahrzeugmasse und einem Widerstandsfaktor (Rollwiderstand, Luftwiderstand) und der Fahrzeugdynamik (Geschwindigkeit, Beschleunigung) könnte z.B. das Drehmoment berechnet werden. Aus der Fahrzeuggeschwindigkeit und einer Fahrzeugwiderstandskraft (aus Steigung der Straße, Rollwiderstand, Luftwiderstand, usw.) könnte die Motorleistung ermittelt werden, aus der dann mit der Drehzahl das Drehmoment berechnet werden kann. Es ist offensichtlich, dass es hier eine Fülle von Möglichkeiten gibt, um nicht direkt gemessene Größen zu bestimmen.

In der Auswerteeinheit 4 kann auch die Ganginformation, als zeitliche Abfolge der Gänge Gn und den dazwischenliegenden Gangschaltzeitpunkten GSi, gegebenenfalls auch die Kupplungsschaltzeitpunkte KSi, wie oben ausgeführt ermittelt werden. Diese Ganginformation kann in der Auswerteeinheit 4 verwendet werden, um die Sollwerte SW für den Prüflauf zu ermitteln, beispielsweise durch Simulation einer Fahrt mit einem virtuellen Fahrzeug wie oben erläutert. Die Ganginformation kann aber auch der Prüfstandautomatisierungseinheit 13 als Sollwert SW übergeben werden, um den Prüfling am Prüfstand 10 zu steuern. Beispielsweise kann als Prüfling ein Antriebsstrang mit Verbrennungsmotor 11 und Getriebe aufgebaut sein, wobei die Prüfstandautomatisierungseinheit 13 während des Prüflaufs mit der Ganginformation das Getriebe, und gegebenenfalls auch die Kupplung, betätigt.

Die Auswerteeinheit 4 könnte auch in der Prüfstandautomatisierungseinheit 13 implementiert sein, als Hardware und/oder Software.

## Patentansprüche

1. Verfahren zur Durchführung eines Prüfversuchs auf einem Prüfstand (10) zur Nachbildung einer Testfahrt eines Fahrzeugs (1), die in Form von Messwerten (MW) repräsentiert wird, die eine zeitliche Abfolge einer Fahrzeuggeschwindigkeit (v) umfassen, wobei am Prüfstand (10) ein Prüfling und eine damit verbundene Belastungsmaschine (12) vorgesehen sind und ein Prüflauf in Form einer zeitlichen Abfolge von Sollwerten (SW) für den Prüfling und die Belastungsmaschine (12) vorgegeben wird, **dadurch gekennzeichnet, dass** die Messwerte (MW) eine zeitlichen Abfolge eine Motordrehzahl (N) umfassen, wobei aus Datenpunkten (DP) aus zusammengehörigen Fahrzeuggeschwindigkeiten (v) und Motordrehzahlen (N) mittels eines Clustering-Algorithmus eine Anzahl von Bereichen (Bn) mit linearem Zusammenhang zwischen der Fahrzeuggeschwindigkeit (v) und der Motordrehzahl (N) identifiziert werden und der Clustering-Algorithmus die Datenpunkte (DP) der Anzahl der Bereiche (Bn) zuordnet und für jeden Bereich (Bn) ein Clusterzentrum (CZn) berechnet, das jeweils als Gang (Gn) interpretiert wird, **dass** den Datenpunkten (DP) eines Bereiches (Bn) der mit dem Clusterzentrum (CZn) des Bereiches (Bn) verknüpfte Gang (Gn) zugeordnet wird, um eine zeitliche Abfolge von Gängen (Gn) zu erhalten **und dass** die ermittelte zeitliche Abfolge der Gänge (Gn) als Sollwert (SW) des Prüflaufs oder zur Ermittlung eines anderen Sollwertes (SW) des Prüflaufs verwendet wird.

2. Verfahren nach Anspruch 1, **dadurch gekennzeichnet, dass** sich in der zeitlichen Abfolge von Gängen (Gn) jeweils zwischen zwei benachbarten Gängen (Gn) ein Gangschaltzeitpunkt (GSi) ergibt **und dass** die zeitliche Abfolge der der Gangschaltzeitpunkte (GSi) als Sollwert (SW) des Prüflaufs oder zur Ermittlung eines anderen Sollwertes (SW) des Prüflaufs verwendet wird.

3. Verfahren nach Anspruch 2, **dadurch gekennzeichnet, dass** zumindest ein Gangschaltzeitpunkt (GSi) als Kupplungsschaltzeitpunkt (KSi) für den Gangwechsel herangezogen wird **und dass** der zumindest eine Kupplungsschaltzeitpunkt (KSi) als Sollwert (SW) des Prüflaufs oder zur Ermittlung eines anderen Sollwertes (SW) des Prüflaufs verwendet wird

4. Verfahren nach Anspruch 1 oder 2, **dadurch gekennzeichnet, dass** vor der Anwendung des Clustering-Algorithmus die Datenpunkte (DP) einer statistischen Häufigkeitsanalyse unterzogen werden, um Ausreißer Datenpunkte (DP') zu identifizieren.

5. Verfahren nach Anspruch 4, **dadurch gekennzeichnet, dass** die Ausreißer Datenpunkte (DP') für den Clustering-Algorithmus aus der zeitlichen Abfolge von Datenpunkten (DP) ausgeschieden werden.

6. Verfahren nach Anspruch 4, **dadurch gekennzeichnet, dass** der Zeitpunkt ($t_{DP'}(i)$) des Auftretens eines ersten Ausreißer Datenpunktes (DP') nach einem Bereich mit linearem Zusammenhang zwischen der Fahrzeuggeschwindigkeit (v) und der Motordrehzahl (N) als Beginn einer Einschwingphase (ts) verwendet wird und das Ende der Einschwingphase (ts) nach einer vorgegebenen Zeit nach dem Beginn der Einschwingphase (ts) festgelegt wird, dass zwischen dem Ende der Einschwingphase (ts) und dem Beginn der nächsten Einschwingphase (ts) eine stabile Fahrphase ($t_{konst}$) festgelegt wird **und dass** für den Clustering-Algorithmus nur Datenpunkte (DP) verwendet werden, die einer stabilen Fahrphase ($t_{konst}$) zugeordnet sind.

7. Verfahren nach Anspruch 6, **dadurch gekennzeichnet, dass** Datenpunkte (DP), die einer Einschwingphase (ts) zugeordnet sind, auf Null gesetzt werden und ebenfalls für den Clustering-Algorithmus verwendet werden.

8. Verfahren nach Anspruch 4, **dadurch gekennzeichnet, dass** der Zeitpunkt ($t_{DP'}(i)$) des Auftretens eines ersten Ausreißer Datenpunktes (DP) nach einem Bereich mit linearem Zusammenhang zwischen der Fahrzeuggeschwindigkeit (v) und der Motordrehzahl (N) als Beginn einer Einschwingphase ($t_s$) verwendet wird **und dass** dieser Zeitpunkt ($t_{DP'}(i)$) als Gangschaltzeitpunkt (GSi) und/oder Kupplungsschaltzeitpunkt (KSi) für den Gangwechsel herangezogen wird.

9. Verfahren nach einem der Ansprüche 1 bis 8, **dadurch gekennzeichnet, dass** als weiterer Messwert (MW) ein zeitlicher Verlauf einer Fahrpedalstellung (a) verwendet wird und in diesem zeitlichen Verlauf zumindest ein Zeitbereich (ZN) gesucht wird, in dem das Fahrpedal nicht betätigt wird, **dass** in diesem Zeitbereich (ZN) zeitlich aufeinander folgende Gangschaltzeitpunkte (GSi, GSi+1) gesucht werden **und dass** der dem späteren Gangschaltzeitpunkt (GSi+1) zugeordnet Gang (Gn) in der zeitlichen Abfolge der Gänge (Gn) als der Gang (Gn) am zeitlich früheren Gangschaltzeitpunkte (GSi) herangezogen wird.

10. Prüfstand zur Durchführung eines Prüfversuchs zur Nachbildung einer Testfahrt eines Fahrzeugs (1), die in Form von Messwerten (MW) vorgegeben ist, wobei am Prüfstand (10) ein Prüfling und eine damit verbundene Belastungsmaschine (12) vorgesehen sind und eine Prüfstandautomatisierungseinheit (13) vorgesehen ist, die sowohl den Prüfling, als auch die Belastungsmaschine (12) durch Vorgabe von Sollwerten (SW) eines Prüflaufs für den Prüfling und die Belastungsmaschine (12) regelt, **dadurch gekennzeichnet, dass** eine Auswerteinheit (4) vorgesehen ist, die eine zeitlichen Abfolge einer Fahrzeuggeschwindigkeit (v) und einer Motordrehzahl (N) als Messwerte (MW) verwendet, um aus Datenpunkten (DP) aus zusammengehörigen Fahrzeuggeschwindigkeiten (v) und Motordrehzahlen (N) mittels eines Clustering-Algorithmus eine Anzahl von Bereichen (Bn) mit linearem Zusammenhang zwischen der Fahrzeuggeschwindigkeit (v) und der Motordrehzahl (N) zu identifizieren und die Auswerteinheit (4) für jeden Bereich (Bn) ein als Gang (Gn) interpretiertes Clusterzentrum (CZn) berechnet und die Auswerteinheit (4) jeden Datenpunkt (DP) einem Bereich (Bn) und dem mit dem Bereich (Bn) verknüpften Gang (Gn) zuordnet, um eine zeitliche Abfolge von Gängen (Gn) zu erhalten und dass die Auswerteinheit (4) die ermittelte zeitliche Abfolge der Gänge (Gn) als Sollwert (SW) des Prüflaufs oder zur Ermittlung eines anderen Sollwertes (SW) des Prüflaufs an die Prüfstandautomatisierungseinheit (13) übergibt.

**Claims**

1. A method for carrying out a test on a test bench (10) for simulating a test drive of a vehicle (1), which is represented in the form of measured values (MW), which comprise a chronological sequence of a vehicle speed (v), wherein a test object and a load machine (12) connected to it being provided on the test bench (10) and a test run being specified in the form of a chronological sequence of target values (SW) for the test object and the load machine (12), **characterized in that** the measured values (MW) comprise a chronological sequence of an engine speed (N), wherein a number of areas (Bn) with a linear relationship between the vehicle speed (v) and the engine speed (N) being identified by means of a clustering algorithm from data points (DP) from related vehicle speeds (v) and engine speeds (N), and the clustering algorithm assigns the data points (DP) to the number of areas (Bn) and calculates a cluster center (CZn) for each area (Bn), which is interpreted as a gear (Gn) in each case, **in that** the gear (Gn) linked to the cluster center (CZn) of the area (Bn) is assigned to the data points (DP) of an area (Bn) in order to obtain a chronological sequence of gears (Gn) **and in that** the determined chronological sequence of the gears (Gn) is used as target value (SW) of the test run or to determine another target value (SW) of the test run.

2. The method according to claim 1, **characterized in that** in the chronological sequence of gears (Gn) there is a gear shift time (GSi) between two adjacent gears (Gn) **and in that** the chronological sequence of the gear shift times (GSi) is used as target value (SW) of the test run or to determine another target value (SW) of the test run.

3. The method according to claim 2, **characterized in that** at least one gear shift time (GSi) is used as the clutch shift time (KSi) for the gear change **and in that** the at least one clutch shift time (KSi) is used as target value (SW) of the test run or to determine another target value (SW) of the test run.

4. The method according to claim 1 or 2, **characterized in that** before the application of the clustering algorithm the data points (DP) are subjected to a statistical frequency analysis in order to identify outlier data points (DP').

5. The method according to claim 4, **characterized in that** the outlier data points (DP') for the clustering algorithm are eliminated from the chronological sequence of data points (DP).

6. The method according to claim 4, **characterized in that** the time $(t_{DP'}(i))$ of the occurrence of a first outlier data point (DP') after an area with a linear relationship between the vehicle speed (v) and the engine speed (N) is used as the start of a settling phase (ts) and the end of the settling phase $(t_s)$ is determined after a predetermined time after the start of the settling phase $(t_s)$, **in that** a stable driving phase $(t_{konst})$ is determined between the end of the settling phase (ts) and the start of the next settling phase (ts) **and in that** only data points (DP) that are assigned to a stable driving phase $(t_{konst})$ are used for the clustering algorithm.

7. The method according to claim 6, **characterized in that** data points (DP) which are assigned to a settling phase (ts) are set to zero and are also used for the clustering algorithm.

8. The method according to claim 4, **characterized in that** the time $(t_{DP'}(i))$ of the occurrence of a first outlier data point (DP) after an area with a linear relationship between the vehicle speed (v) and the engine speed (N) is used as the beginning of a settling phase (ts) **and in that** this time $(t_{DP'}(i))$ is used as the gear shift time (GSi) and/or clutch shift time (KSi) for the gear change.

9. The method according to any of claims 1 to 8, **characterized in that** a time profile of an accelerator pedal position (a) is used as a further measured value (MW) and at least one time range (ZN) in which the accelerator pedal is not actuated is sought in this time profile, **in that** in this time range (ZN) chronologically successive gear shift times (GSi, GSi+1) are sought **and in that** the gear (Gn) assigned to the later gear shift time (GSi+1) in the chronological sequence of gears (Gn) is used as the gear (Gn) at the earlier gear shift time (GSi).

10. A test bench for carrying out a test to simulate a test drive of a vehicle (1), which is specified in the form of measured values (MW), a test object and a load machine (12) connected to it being provided on the test bench (10) and a test bench automation unit (13) being provided which controls both the test object and the load machine (12) by specifying target values (SW) of the test run for the test object and the load machine (12), **characterized in that** an evaluation unit (4) is provided which uses a chronological sequence of a vehicle speed (v) and an engine speed (N) as measured values (MW), in order to identify a number of areas (Bn) with a linear relationship between the vehicle speed (v) and the engine speed (N) by means of a clustering algorithm from data points (DP) from related vehicle speeds (v) and engine speeds (N), and the evaluation unit (4) calculates a cluster center (CZn) for each area (Bn), which is interpreted as a gear (Gn) and the evaluation unit (4) assigns each data point (DP) to an area (Bn) and the gear (Gn) linked to the area (Bn) in order to obtain a chronological sequence of gears (Gn), **and in that** the evaluation unit (4) transfers the determined chronological sequence of the gears (Gn) as target value (SW) of the test run or to determine another target value (SW) of the test run to the test bench automation unit (13).

**Revendications**

1. Procédé de mise en œuvre d'un essai sur un banc d'essai (10) destiné à la simulation d'un essai de conduite d'un véhicule (1), lequel essai de conduite est représenté sous la forme de valeurs de mesure (MW), lesquelles comprennent une séquence temporelle d'une vitesse de véhicule (v), dans lequel, sur le banc d'essai (10) un échantillon d'essai et une machine de charge (12) reliée à celui-ci sont fournis et une course d'essai est prédéterminée sous la forme d'une séquence temporelle de valeurs de consigne (SW) pour l'échantillon d'essai et la machine de charge (12), **caractérisé en ce que** les valeurs de mesure (MW) comprennent une séquence temporelle d'un régime moteur (N), dans lequel un nombre de zones (Bn) présentant une relation linéaire entre la vitesse de véhicule (v) et le régime moteur (N) sont identifiées à partir des points de données (DP) à partir des vitesses de véhicule (v) et des régimes moteurs (N) associés au moyen d'un algorithme de regroupement, et l'algorithme de regroupement attribue les points de données (DP) au nombre de zones (Bn) et calcule un centre de regroupement (CZn) pour chaque zone (Bn), lequel est respectivement interprété comme un rapport (Gn), **que** les points de données (DP) d'une zone (Bn) sont attribués au rapport (Gn) rattaché au centre de regroupement (CZn) de la zone (Bn) afin d'obtenir une séquence temporelle de rapports (Gn) **et que** la séquence temporelle de rapports (Gn) déterminée est utilisée comme valeur de consigne (SW) de la course d'essai ou pour la détermination d'une autre valeur de consigne (SW) de la course d'essai.

2. Procédé selon la revendication 1, **caractérisé en ce qu'**un instant de commutation de rapport (GSi) existe dans la séquence temporelle de rapports (Gn) entre respectivement deux rapports (Gn) adjacents **et que** la séquence temporelle d'instants de commutation de rapport (GSi) est utilisée comme valeur de consigne (SW) de la course d'essai ou pour la détermination d'une autre valeur de consigne (SW) de la course d'essai.

3. Procédé selon la revendication 2, **caractérisé en ce qu'**au moins un instant de commutation de rapport (GSi) est utilisé comme instant de commutation d'embrayage (KSi) pour le changement de rapport **et que** l'au moins un instant de commutation d'embrayage (KSi) est utilisé comme valeur de consigne (SW) de la course d'essai ou pour la détermination d'une autre valeur de consigne (SW) de la course d'essai.

4. Procédé selon la revendication 1 ou 2, **caractérisé en ce qu'**avant l'application de l'algorithme de regroupement, les points de données (DP) sont soumis à une analyse de fréquence statistique afin d'identifier des points de données (DP') aberrants.

5. Procédé selon la revendication 4, **caractérisé en ce que** les points de données (DP') aberrants sont éliminés de la séquence temporelle de points de données (DP) pour l'algorithme de regroupement.

6. Procédé selon la revendication 4, **caractérisé en ce que** l'instant ($t_{DP'}(i)$) de l'occurrence d'un premier point de données (DP') aberrant après une zone présentant une relation linéaire entre la vitesse de véhicule (v) et le régime moteur (N) est utilisé comme début d'une phase transitoire (ts) et la fin de la phase transitoire ($t_s$) est définie après un temps prédéterminé après le début de la phase transitoire ($t_s$), **qu'**une phase de conduite ($t_{konst}$) stable est définie entre la fin de la phase transitoire ($t_s$) et le début de la phase transitoire (ts) suivante **et que** seuls des points de données (DP) attribués à une phase de conduite ($t_{konst}$) stable sont utilisés dans l'algorithme de regroupement.

7. Procédé selon la revendication 6, **caractérisé en ce que** les points de données (DP), lesquels sont attribués à une phase transitoire (ts) sont mis à zéro et sont également utilisés pour l'algorithme de regroupement.

8. Procédé selon la revendication 4, **caractérisé en ce que** l'instant ($t_{DP'}(i)$) de l'occurrence d'un premier point de données (DP) aberrant après une zone présentant une relation linéaire entre la vitesse de véhicule (v) et le régime moteur (N) est utilisé comme début d'une phase transitoire (ts) **et que** ledit instant ($t_{DP'}(i)$) est utilisé comme instant de commutation de rapport (GSi) et/ou instant de commutation d'embrayage (KSi) pour le changement de rapport.

9. Procédé selon l'une quelconque des revendications 1 à 8, **caractérisé en ce qu'**un profil temporel d'une position de pédale d'accélération (a) est utilisé comme autre valeur de mesure (MW) et au moins une zone temporelle (ZN) est recherchée dans ledit profil temporel, dans laquelle la pédale d'accélération n'est pas actionnée, **que** des instants de commutation de rapport (GSi, GSi+1) consécutifs dans le temps sont recherchés dans ladite zone temporelle (ZN) **et que** le rapport (Gn) attribué à l'instant de commutation de rapport (GSi+1) ultérieur dans la séquence temporelle de rapports (Gn) est utilisé comme rapport (Gn) aux instants de commutation de rapport (GSi) antérieurs.

10. Banc d'essai destiné à la mise en œuvre d'un essai destiné à la simulation d'un essai de conduite d'un véhicule (1), lequel est prédéterminé sous la forme de valeurs de mesure (MW), dans lequel sur le banc d'essai (10) un échantillon d'essai et une machine de charge (12) reliée à celui-ci sont fournis, et une unité d'automatisation de banc d'essai (13) étant fournie, laquelle régule à la fois l'échantillon d'essai et la machine de charge (12) par prédétermination des valeurs de consigne (SW) d'une course essai pour l'échantillon d'essai et la machine de charge (12), **caractérisé en ce qu'**une unité d'évaluation (4) est fournie, laquelle utilise une séquence temporelle d'une vitesse de véhicule (v) et d'un régime moteur (N) comme valeurs de mesure (MW) afin d'identifier un nombre de zones (Bn) présentant une relation linéaire entre la vitesse de véhicule (v) et le régime moteur (N) à partir des points de données (DP) à partir des vitesses de véhicule (v) et des régimes moteurs (N) associés au moyen d'un algorithme de regroupement, et l'unité d'évaluation (4) calcule un centre de regroupement (CZn) interprété comme un rapport (Gn) pour chaque zone (Bn) et l'unité d'évaluation (4) attribue chaque point de données (DP) à une zone (Bn) et au rapport (Gn) rattaché à la zone (Bn) afin d'obtenir une séquence temporelle de rapports (Gn) et que l'unité d'évaluation (4) transmet la séquence temporelle de rapports (Gn) déterminée à l'unité d'automatisation de banc d'essai (13) comme valeur de consigne (SW) de la course d'essai ou pour la détermination d'une autre valeur de consigne (SW) de la course d'essai.

S

1

MW

4

2

## Fig. 1

2

5

3

1

$M_S$

$M_V$

$M_F$

SW

10

## Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

**In der Beschreibung aufgeführte Patentdokumente**

- DE 102012018359 A1
- WO 2015166069 A2
- WO 0052363 A
- JP 2009234430 A